# DEMANDE DE BREVET EUROPEEN

(11) **EP 1 734 018 A1**
(43) Date de publication de la demande: **20.12.2006**
(21) Numéro de dépôt: 05012785.1
(22) Date de dépôt: 14.06.2005
(51) Int. Cl.: C03C 17/04, G04B 19/06

(54) **Pièce technique ou décorative associant un matériau transparent et un matériau amorphe à base de silice et son procédé de fabrication**

(71) Demandeur: Comadur S.A., 2400 Le Locle (CH)
(72) Inventeur: Derriey, Gilles, 25500 Morteau (FR); Verdon, Christian, 1034 Boussens (FR); Bourban, Steve, 1503 Ecublens (FR)
(74) Mandataire: Thérond, Gérard Raymond

(57) **Abrégé**

L'invention concerne un substrat transparent (10) en un matériau transparent résistant à une température supérieure à 500°C, tel que le saphir, au moins une de ses faces (11,12) totalement ou partiellement revêtue de couches d'émail (23 à 30), à sa surface ou dans des évidements (13,14) pour rendre des zones opaques ou transparentes en fonction des épaisseurs des couches d'émail et des pigments utilisés dans la composition de l'émail.
Application au cadran d'une pièce d'horlogerie.

## Description

### DOMAINE TECHNIQUE

La présente invention a pour objet une pièce technique ou décorative associant un matériau transparent résistant à une température supérieure à 500°C et un matériau à base de silice. Elle concerne plus particulièrement une telle pièce dont la surface est partiellement ou totalement revêtue d'un dépôt d'émail. L'invention sera illustrée à titre d'exemple par le cadran d'une pièce d'horlogerie dont on pourra modifier l'aspect esthétique, et/ou qui pourra être structuré pour rendre visibles des parties du mouvement ou des informations affichées sous le cadran.

### ARRIERE PLAN TECHNOLOGIQUE

On connaît depuis longtemps des montres à mouvement mécanique, dites « montres-squelettes ». Un brevet suisse CH 28539 décrit une montre dans laquelle le cadran est réalisé en une matière transparente telle que du verre, du mica, ou du celluloïd et permet de voir le mécanisme du mouvement, et les platines et ponts en métal. Les index horaires sont rapportés par tout moyen sur la surface visible du cadran. Les brevets US 4 534 660 et CH 690 518 décrivent des montres encore plus « squelette ». Dans le brevet US 4 534 660, la plaque supérieure formant la glace, les platines et les ponts, et la plaque de fond constituent un empilement en un matériau cristallin tel que le saphir, lesdites plaques étant usinées avec des ouvertures ou des évidemments pour loger les pièces du mouvement, de façon à rendre visible tout le mécanisme de la montre. Le brevet CH 690 518 vise le même but, mais avec une cage de montage transparente monobloc réalisée par usinage ultrason au moyen d'une sonotrode. Dans ce dernier document il est conseillé de reporter les index horaires sur la lunette pour augmenter l'effet esthétique.

Entre l'art antérieur le plus ancien où le cadran est entièrement opaque et l'art antérieur précité ou il est entièrement transparent, à l'exception de quelques zones de marquage, il n'existe pas de solutions intermédiaires permettant d'avoir des zones assez étendues opaques et les zones complémentaires transparentes ou inversement. L'enseignement de cet art antérieur ne permet pas non plus de créer des nuances de couleur à la surface du cadran.

### RESUME DE L'INVENTION

La présente invention vise donc à pallier les inconvénients de l'art antérieur précité en procurant une pièce dans laquelle l'association de deux matériaux n'ayant à la meilleure connaissance de la demanderesse jamais été utilisés ensemble pour produire un résultat technique ou un effet décoratif en pouvant créer dans ladite pièce des zones transparentes, opaques ou translucides, colorées ou non.

A cet effet, l'invention a pour objet une pièce à usage technique et/ou décoratif comprenant un substrat transparent dont au moins une face est totalement ou partiellement revêtue de dépôts opaques, translucides ou transparents colorés ou non. L'invention est caractérisée en ce que le substrat est réalisé en un matériau transparent résistant à une température supérieure à 500°C et en ce que les dépôts sont constitués par des couches d'émail.

Le matériau transparent résistant à une température supérieure à 500°C peut être un matériau mono ou polycristallin par exemple un quartz, un spinelle ou un corindon, notamment le saphir. On peut également employer un matériau amorphe, tel qu'un verre minéral dans la mesure où son point de ramollissement est supérieur à la température nécessaire pour effectuer le dépôt d'émail.

Selon une autre caractéristique de l'invention, les couches d'émail sont déposées dans des évidements usinés dans au moins une face du substrat, les parties n'ayant pas d'évidements pouvant également être recouvertes de couches d'émail, ou au contraire laissées nues, et donc être transparentes.

Selon encore une autre caractéristique de l'invention les couches d'émail peuvent être épaisses et, ou au contraire minces ou ultra-minces et translucides, voire transparentes, ou opaques en fonction des pigments entrant dans la composition de l'émail.

Selon encore d'autres caractéristiques de l'invention des évidements et des couches d'émail de couleurs différentes peuvent être prévues dans les deux faces du substrat transparent, des couches translucides sur chaque face pouvant présenter des zones de recouvrement.

### BREVE DESCRIPTION DES DESSINS

D'autres caractéristiques et avantages de la présente invention apparaîtront dans la description suivante de plusieurs modes de réalisation, donnés à titre illustratif et non limitatif, en référence aux dessins annexés dans lesquels :
- la figure 1 représente en vue de dessus une montre-bracelet incorporant une pièce décorative et technique selon l'invention ;
- les figures 2 à 5 représentent selon la coupe IV-IV de la figure 1 les différentes étapes d'un premier mode de réalisation ;
- la figure 6 représente en coupe un deuxième mode de réalisation,
- la figure 7 représente en coupe un troisième mode de réalisation, et
- la figure 8 représente en coupe un quatrième mode de réalisation.

### DESCRIPTION DETAILLEE DE L'INVENTION

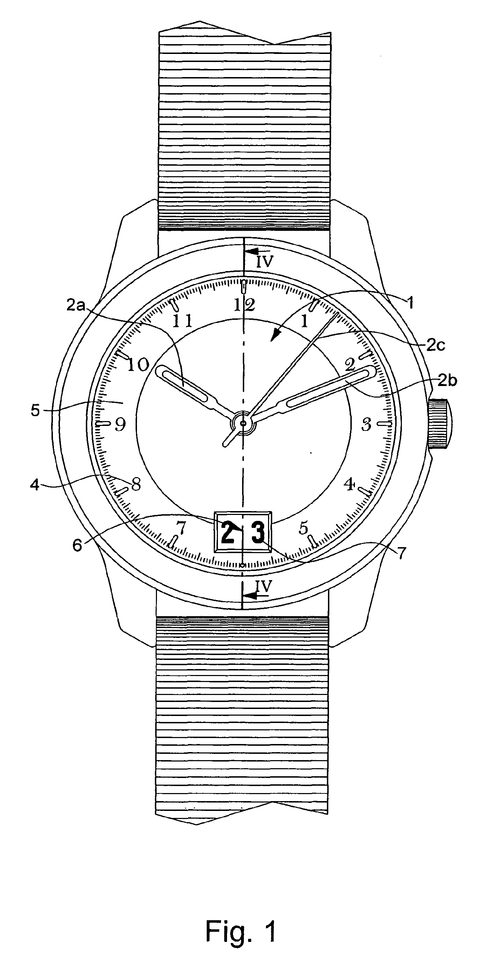

En se référant d'abord aux figures 1 à 5 on décrit ci-après un premier mode de réalisation d'une pièce selon l'invention utilisée pour former le cadran 1 d'une montre-bracelet à affichage analogique au moyen d'aiguilles d'heures 2a, de minutes 2b et de secondes 2c se déplaçant en regard d'index horaires 4 inscrits sur un tour d'heures 5. Dans l'exemple représenté, le cadran 1 comporte un guichet 6 traversant toute l'épaisseur du cadran 1 et en dessous duquel se déplace un disque de quantième 7.

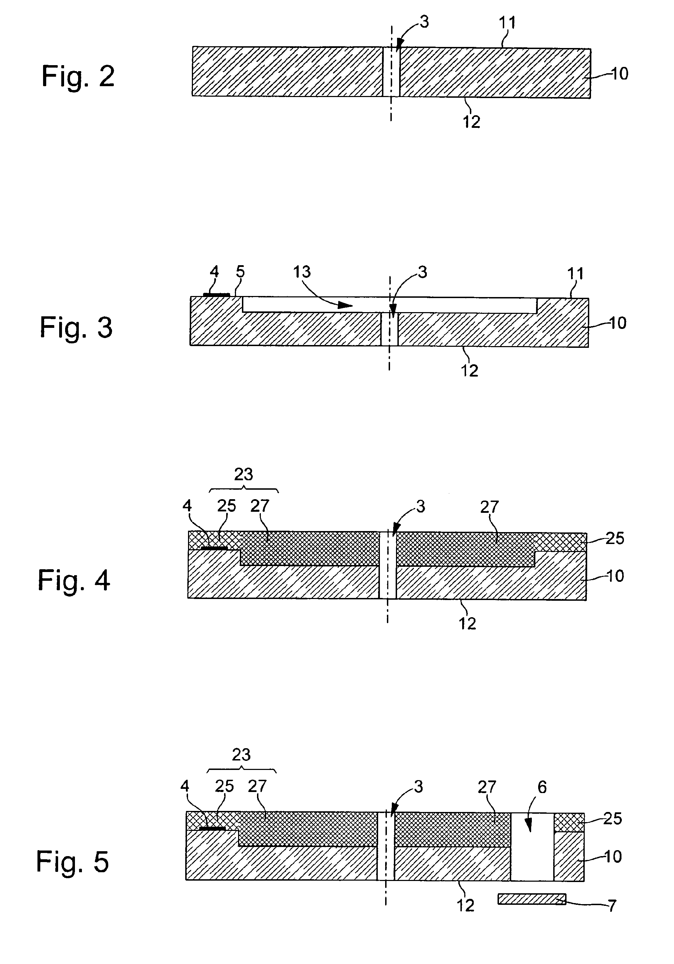

Le cadran 1 est représenté en coupe à la figure 4 selon la ligne 6h - 12h, l'échelle selon l'épaisseur étant fortement exagérée pour une meilleure compréhension des dessins. Le cadran est formé par un substrat transparent 10 ayant une face supérieure 11 orientée vers un observateur, la face inférieure étant désignée par la référence 12.

Le substrat transparent 10 représenté à la figure 2 est découpé aux dimensions du cadran dans une plaque ayant une épaisseur comprise entre 0,4 et 0,9 mm, le matériau constituant ladite plaque devant pouvoir résister à des températures supérieures à 500°C, de préférence à des températures comprises entre 700°C et 1300°C. Le substrat 10 est percé en son centre d'un trou 3 pour le passage des canons des aiguilles 2a, 2b, 2c, par des moyens connus par exemple à la meule ou à ultrasons avec une sonotrode. De façon équivalente, le trou peut être exécuté dans une dernière étape de fabrication du cadran.

Comme représenté à la figure 4, on usine dans la face supérieure 11 du substrat transparent 10 un évidemment 13 correspondant au disque situé à l'intérieur du tour d'heures 5, ledit évidemment ayant par exemple une profondeur de 0,2 mm. Dans le cas d'un substrat transparent 10 en saphir, l'évidemment 10 est réalisé par abrasion mécanique (lamage, gravage) avec des outils diamantés. Selon la nature du substrat transparent 10, d'autres méthodes d'usinage sont possibles. Par exemple, avec un substrat en quartz on peut par exemple effectuer un usinage photochimique.

Comme on le voit à la figure 4, le tour d'heures 5 et l'évidemment 13 sont recouvert de couches d'émail 23. Ces couches d'émail 23 sont obtenues par les techniques connues comprenant plusieurs étapes consistant en un trempage, pulvérisation, tamponnage ou sérigraphie pour appliquer une composition d'émail déterminée, et en un passage au four après chaque étape jusqu'à obtenir l'épaisseur voulue. La température de cuisson est comprise entre 700°C et 1300°C selon la nature de la composition d'émail. Pour éviter une dépression des couches d'émail au niveau du trou d'axe 3, il est possible de prévoir un insert provisoire (non représenté) résistant à la chaleur, par exemple un insert en céramique, ledit insert étant ensuite éliminé dans l'étape de finition. L'étape de finition consiste à polir les deux faces avec une meule ou un papier abrasif à grains fins (9 à 15 µm) pour arriver aux cotes souhaitées, puis à effectuer un dernier passage au four pour obtenir un glaçage de la surface émaillée.

Comme on le voit, les couches d'émail 27 situées au centre du cadran sont épaisses, par exemple 0,4 mm, et peuvent être opaques à la lumière en fonction des pigments entrant dans la composition de l'émail. La teinte visible par l'observateur sera donc celle de l'émail. Au contraire les couches d'émail 25 sur le tour d'heures sont minces, et suffisamment minces, par exemple 0,2 mm pour les rendre translucides et permettre de voir le substrat sous-jacent. Si on le souhaite, le substrat sous-jacent peut comporter des marques ou des décorations, telles que des index horaires 4, formées par exemple par métallisation, préalablement aux étapes de formation des couches d'émail. La couche d'émail mince et translucide 25 permet donc de lire les indications portées par le tour d'heures sur un fond correspondant à la teinte choisie pour l'émail. Il est bien entendu possible, comme cela est connu depuis longtemps, de rapporter des marques ou des décorations à la surface de l'émail, voire de combiner les deux possibilités pour augmenter les choix esthétiques.

On observera également que la même pièce fabriquée comme indiqué ci-dessus peut présenter pour l'observateur deux aspects différents selon la façon dont le cadran 1 est monté dans le boîtier. Si on oriente la face émaillée 11 côté observateur, l'aspect de la zone opaque 27 et de la zone translucide 25 sera brillant. Si au contraire on oriente la face non émaillée 12 côté observateur, l'interface entre le substrat transparent 10 et les couches d'émail 25, 27 donnera un aspect un peu granuleux. Ainsi l'invention permet, avec une même ligne de fabrication de cadrans, de produire deux collections de montres-bracelets différentes.

Une fois le cadran terminé, ou avant le dernier passage au four pour glaçage, il est possible comme représenté sur la figure 5, de découper un large passage traversant formant le guichet 6 permettant de voir les informations portées par le disque de quantième 7, ou par tout autre support.

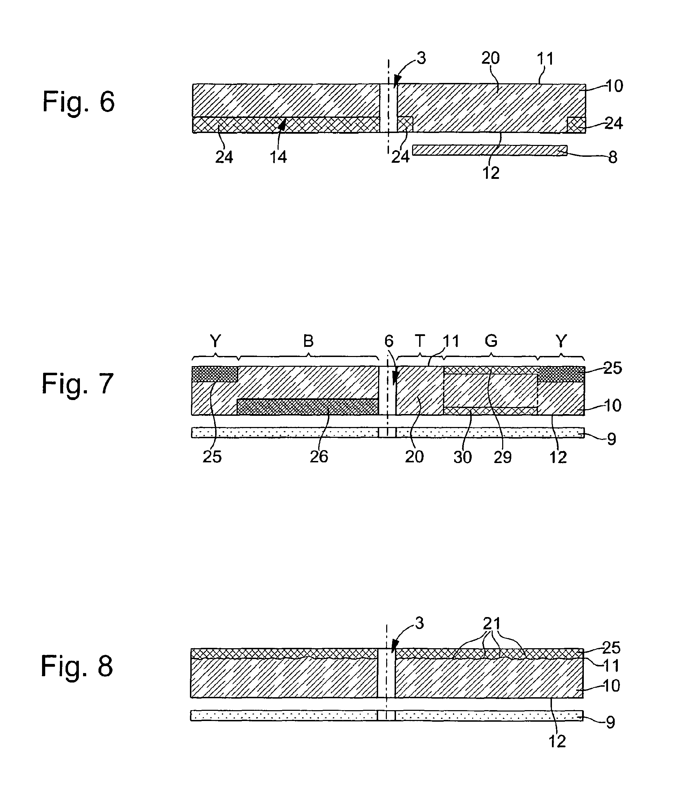

En se référant maintenant à la figure 6, on a représenté en coupe un deuxième mode de réalisation qui diffère du mode de réalisation précédent en ce que le substrat monocristallin transparent 10 est usinée sur la face 12 opposée à la face directement visible par un observateur. Les zones 14 sont usinées en creux et garnies de couches d'émail pour former une couche épaisse opaque 24 ne débordant pas en dehors des parties usinées en creux, en laissant ainsi des zones 20 dépourvues de tout revêtement d'émail et donc totalement transparentes. Le contour de ces zones transparentes 20 peut être prévu pour permettre de voir une partie du mécanisme, telle qu'un tourbillon représenté schématiquement par la référence 8.

A la figure 7 on a représenté un troisième mode de réalisation qui est en quelque sorte une synthèse des modes de réalisation précédemment décrits et qui comporte un éclairage arrière symbolisé par une feuille électroluminescente 9. La face supérieure 11 orientée vers un observateur est usinée en creux pour permettre le dépôt de couches d'émail minces 25 et le dépôt de couches d'émail ultraminces 29, par exemple 0,1 mm. Certaines zones de la surface supérieure 11 sont dépourvues de dépôts d'émail et on suppose que l'émail utilisé a une première couleur, par exemple jaune (Y). La face inférieure 12 est également usinée en creux pour permettre des dépôts de couches d'émail minces 26 et ultraminces 30, l'émail utilisé ayant une deuxième couleur, par exemple bleu (B). Dans la partie située à gauche du trou d'aiguilles 3 les zones émaillées supérieure 25 et inférieures 26 sont juxtaposées et les couleurs visibles par un observateur seront le jaune (Y) et le bleu (B). La partie située à droite du trou d'aiguilles 3 comporte une zone entièrement transparente, une zone où les dépôts ultraminces supérieurs 29 et inférieurs 30 se superposent pour donner par mélange des deux couleurs primaires la couleur verte (G), et une zone de la surface supérieure où le dépôt d'émail ultramince 29 est jointif avec le dépôt d'émail mince 25.

Pour une meilleure compréhension des dessins, les dépôts d'émail mince et ultramince ont été représentés avec des épaisseurs constantes, c'est-à-dire avec des évidements ayant un fond parallèle aux surfaces du substrat transparent 10. Il est bien évident qu'il n'y a aucune difficulté technique à réaliser les fonds des évidements avec une surface inclinée faisant varier progressivement l'épaisseur des couches d'émail. Cette variante de réalisation non représentée permet d'avoir des nuances d'une même couleur ou un dégradé entre deux couleurs différentes lorsque des dépôts d'émail sont effectués sur les deux faces du substrat transparent et présentent des zones de recouvrement. De même, et notamment lorsqu'une face comporte des évidements disjoints, il est possible d'avoir plus d'une couleur d'émail sur la même face, voire de créer un émaillage cloisonné. La figure 8 illustre un quatrième mode de réalisation qui peut également être combiné avec les modes de réalisations précédents. Dans ce mode de réalisation une des surfaces, la surface supérieure 11, a une structuration 21 effectuée par laser pour dessiner un hologramme puis elle est revêtue de couches minces d'émail, ledit hologramme pouvant être observé par réflexion ou par transmission si on prévoit une éclairage arrière 9.

Le cadran d'une montre-bracelet a été donné uniquement à titre d'exemple, l'emploi d'une pièce réalisée selon l'invention n'étant pas limité au domaine horloger. Une telle pièce peut être incorporé dans n'importe quel type de boîtier pour lequel il est souhaitable d'avoir un panneau au moins partiellement transparent. Elle peut par exemple constituer la glace de fermeture du couvercle d'un coffret à bijoux.

## Revendications

1. Pièce à usage technique et/ou décoratif comprenant un substrat (10) transparent dont au moins une face (11, 12) est totalement ou partiellement revêtue de dépôts (23 à 30) opaques, translucides ou transparents colorés ou non, **caractérisée en ce que** le substrat transparent (10) est un matériau résistant à une température supérieure à 500°C, et **en ce que** les dépôts (23 à 30) opaques ou translucides sont constitués par des couches d'émail.

2. Pièce selon la revendication 1, **caractérisé en ce que** le matériau transparent formant la glace est un matériau mono ou polycristallin par exemple un quartz, un spinelle ou un corindon.

3. Pièce selon la revendication 2, **caractérisé en ce que** le matériau constituant la glace est un saphir.

4. Pièce selon la revendication 1, **caractérisé en ce que** le matériau transparent formant la glace est un matériau amorphe, tel qu'un verre minéral.

5. Pièce selon la revendication 1, **caractérisée en ce que** le substrat (10) transparent comporte sur au moins une de ses faces des évidements (13, 14) permettant de faire varier l'épaisseur des couches d'émail pour en faire varier la nuance d'une teinte d'émail donnée, voire pour les rendre translucides.

6. Pièce selon la revendication 1, **caractérisée en ce que** les couches d'émail sont formées sur la face visible (11) de ladite pièce.

7. Pièce selon la revendications 1, **caractérisée en ce que** les couches d'émail sont formées sur la face (12) de la pièce opposée à la face visible (11).

8. Pièce selon la revendications 1, **caractérisée en ce que** les couches d'émail sont formées sur les deux faces (11 et 12) de la pièce.

9. Pièce selon la revendication 8, **caractérisée en ce que** les couches d'émail de la face visible (11) occupent des zones complémentaires de celles occupées par les couches d'émail de la face opposée (12).

10. Pièce selon la revendication 8, **caractérisée en ce que** les couches d'émail de la face visible (11) et celles de la face opposée (12) présentent des zones de recouvrement.

11. Pièce selon les revendications 9 ou 10, **caractérisée en ce que** la couche d'émail de la face visible (11) a une teinte différente de celle de la couche d'émail de la face opposée (12).

12. Pièce selon la revendication 1 **caractérisé en ce que** la face visible (11) du substrat transparent (10) est structurée et revêtue de couches d'émail translucides pour former un hologramme (21).

13. Pièce selon la revendication 1, **caractérisée en ce qu'**elle comporte en outre un passage (6) traversant à la fois le substrat transparent et les couches d'émail.

14. Pièce selon la revendication 1, **caractérisée en ce que** certaines zones sont revêtues de marques ou de décorations (4) par métallisation avant le dépôt des couches d'émail.

15. Pièce selon la revendication 1, **caractérisée en ce qu'**elle comporte un éclairage arrière (9) dans les zones où le substrat est entièrement transparent ou comporte des couches d'émail translucides.

16. Pièce selon la revendication 15, **caractérisée en ce que** l'éclairage arrière (9) est choisi parmi les diodes et les éléments électroluminescents.

17. Pièce selon l'une quelconque des revendications précédentes,
**caractérisée en ce qu'**elle constitue le cadran d'une pièce d'horlogerie.

18. Procédé de fabrication d'une pièce à usage technique et/ou décoratif comprenant un substrat transparent (10) en un matériau résistant à une température supérieure à 500°C dont au moins une face (11, 12) est revêtue totalement ou partiellement de dépôts (23 à 30) constitués par des couches d'émail opaques ou translucides, comportant les étapes consistant à
- dans au moins un face (11, 12) usiner un évidemment (13, 14), ou effectuer une structuration de ladite face
- par une succession de dépôts et cuissons remplir au moins l'évidemment (13, 14) et/ou recouvrir toute la surface de la face éventuellement structurée (21)
- effectuer un polissage des deux faces (11 et 12).

19. Procédé selon la revendication 18, **caractérisé en ce que** le matériau constituant le substrat transparent (10) est choisi parmi les matériaux capables de résister à une température supérieure à 500°C, de préférence à une température comprise entre 700°C et 1300°C.

20. Procédé selon la revendication 18, **caractérisé en ce que** le matériau constituant le substrat transparent (10) est du saphir.
